# DEMANDE DE BREVET EUROPEEN

(11) **EP 2 574 752 A1**
(43) Date de publication de la demande: **03.04.2013**
(21) Numéro de dépôt: 12182504.6
(22) Date de dépôt: 31.08.2012
(51) Int. Cl.: F02B 21/02, F01L 1/08, B60K 6/12

(54) **Procédé et dispositif d'alimentation en air d'un moteur hybride pneumatique-thermique**

(30) Priorité: 27.09.2011 FR 1158652
(71) Demandeur: PEUGEOT CITROËN AUTOMOBILES SA, 78140 Velizy-Villacoublay (FR)
(72) Inventeur: Vidal, Fabrice, 92130 ISSY LES MOULINEAUX (FR)

(57) **Abrégé**

L'invention concerne un procédé et un dispositif d'alimentation en air d'un moteur hybride pneumatique-thermique (10), le moteur hybride comportant un moteur thermique (11) muni d'au moins un cylindre (16) et d'un réservoir d'air comprimé (19) qui peut être mis en communication avec le cylindre de façon à transférer de l'air comprimé entre le réservoir et le cylindre.

Selon l'invention, la pression de l'air comprimé pendant les phases de transfert de l'air comprimé est ajustée de façon à améliorer le transfert de l'air comprimé. De préférence, la pression dans le réservoir est ajustée de façon à être en opposition de phase par rapport à la pression dans le cylindre.

Le réservoir d'air comporte des moyens pour faire varier la pression dans le réservoir. De préférence, le réservoir comporte au moins une chambre à volume variable.

## Description

La présente invention concerne un moteur hybride pneumatique-thermique et notamment l'utilisation d'un réservoir à géométrie variable pour l'alimentation en air comprimé du moteur.

De façon à diminuer la consommation en carburant des moteurs thermiques et à augmenter leur rendement, plusieurs solutions ont été proposées et certaines sont déjà utilisées commercialement Ainsi, un turbocompresseur est utilisé afin de récupérer une partie de l'énergie des gaz d'échappement des moteurs thermiques. La turbine du turbocompresseur, actionnée par les gaz d'échappement, fait fonctionner un compresseur qui comprime l'air admis dans les cylindres du moteur. Cependant, lorsque le moteur fournit un couple faible, la réaction du turbocompresseur pour délivrer un supplément de couple est relativement lente. De plus, le turbocompresseur ne fonctionne bien entendu que lorsque le moteur est en marche. Il ne procure donc aucune assistance pour le redémarrage du moteur thermique lorsque le véhicule est équipé d'un système d'arrêt et de redémarrage automatique du moteur

D'autre part, des moteurs hybrides ont été développés. Les plus connus sont des moteurs hybrides du type électrique-thermique. Ces moteurs nécessitent une ou plusieurs batterie(s) pour le stockage de l'énergie électrique. Cependant, ces batteries sont onéreuses, lourdes et difficiles à recycler.

Une solution alternative pour assister le moteur thermique consiste à utiliser un moteur hybride pneumatique-thermique. Ce type de moteur se compose d'un moteur thermique auquel un réservoir d'air comprimé a été ajouté. Ce type de moteur est par exemple décrit dans les demandes de brevet FR 2 865 769 et WO 2009036992

La demande de brevet FR 2 865 769 concerne plus particulièrement un moteur hybride pneumatique-thermique à suralimentation par turbocompresseur. Afin d'accroitre le couple fournit par le moteur, on injecte dans les chambres de combustion, lors de la phase de compression du cycle habituel d'un moteur thermique à quatre temps, à partir d'un réservoir d'air comprimé, une quantité supplémentaire d'air suffisante pour obtenir instantanément le couple moteur demandé. Le réservoir d'air comprimé peut être rempli lors de la phase de compression du cycle habituel d'un moteur quatre temps et préférentiellement pendant les phases de freinage du véhicule (frein moteur). De ce fait, l'efficacité énergétique du procédé est très performante pour les utilisations en ville (nombreuses phases de freinage permettant de récupérer de l'énergie dans le réservoir) et moins performante sur circuit autoroutier (pour des raisons opposées).

La demande de brevet US 2007/0157894 A1 concerne un moteur hybride thermique-pneumatique qui, dans une forme de réalisation particulière, comporte un réservoir d'air comprimé à volume variable mais cependant à pression sensiblement constante.

Contrairement à l'enseignement de cette demande de brevet US 2007/0157894 A1, selon la présente invention le transfert d'air comprimé entre le réservoir d'air comprimé et les cylindres est amélioré en faisant varier de façon contrôlée la pression dans le réservoir d'air.

De façon plus précise, la présente invention concerne un procédé d'alimentation en air d'un moteur hybride pneumatique-thermique d'un véhicule, le moteur hybride comportant un moteur thermique muni d'un ou plusieurs cylindre(s) et d'un réservoir d'air comprimé qui peut être mis en communication avec ledit ou lesdits cylindre(s) de façon à transférer de l'air comprimé entre ledit réservoir et ledit ou lesdits cylindre(s). Selon l'invention, la pression de l'air comprimé pendant les phases de transfert de l'air comprimé est ajustée de façon à améliorer le transfert de l'air comprimé.

La pression dans le réservoir est ajustée de façon à avoir un décalage de phase entre la pression dans le cylindre et la pression dans le réservoir.

De préférence, la pression dans le réservoir est en opposition de phase avec la pression dans le ou les cylindre(s), ce qui correspond à un déphasage préférentiel de 180°. Ainsi, pendant les opérations de transfert d'air comprimé, la pression de l'air comprimé dans le réservoir peut être choisie à sa valeur maximale lorsque la pression de l'air comprimé dans le ou les cylindre(s) atteint sa valeur minimale et inversement la pression de l'air comprimé dans le réservoir peut être choisie à sa valeur minimale lorsque la pression de l'air comprimé dans le ou les cylindre(s) atteint sa valeur maximale. Cependant le déphasage peut varier autour dudit déphasage préférentiel, par exemple dans une plage centrée sur le déphasage préférentiel et comprise entre -90° et +90°.

L'invention concerne également un dispositif d'alimentation en air d'un moteur hybride pneumatique-thermique d'un véhicule comportant au moins un cylindre, chaque cylindre comprenant au moins une soupape d'admission d'air et au moins une soupape d'échappement, au moins un réservoir d'air comprimé muni d'une entrée et d'une sortie. Selon l'invention, le réservoir comporte des moyens pour faire varier la pression dans le réservoir.

Selon un mode de réalisation préféré, l'intérieur du réservoir comporte une chambre de forme sensiblement cylindrique et les moyens pour faire varier la pression dans le réservoir comportent un piston qui peut se déplacer dans ladite chambre du réservoir, le piston pouvant être déplacé à l'aide de moyens de déplacement.

Lesdits moyens de déplacement peuvent être choisis parmi l'un des systèmes suivants:
- un actuateur linéaire comprenant un moteur électrique linéaire;
- un actuateur rotatif comprenant un écrou fixe et une vis se déplaçant dans ledit écrou, ladite vis pouvant être mise en rotation par un moteur électrique, la vis étant solidaire du piston;
- un système à crémaillère comprenant une roue dentée pouvant être mise en rotation par un moteur électrique et une crémaillère pouvant être déplacée à l'aide de la roue dentée, la crémaillère étant solidaire du piston;
- un système bielle-manivelle dont la manivelle est entrainée en rotation par un moteur électrique et la bielle étant solidaire du piston;
- un système à came à ressort ou à rainure ou à tambour.

Lorsque le moteur thermique comprend plusieurs cylindres, ledit piston divise ladite chambre en un premier espace et un deuxième espace et en ce que chacun des espaces comporte une entrée et une sortie qui peuvent être reliées aux cylindres.

Ledit moteur thermique fonctionnant selon un cycle à quatre temps ou à deux temps et comprenant quatre cylindres numérotés de 1 à 4 en partant du volant moteur, les cylindres 1 et 4 peuvent être connectés audit premier espace et les cylindres 2 et 3 peuvent être connectés audit deuxième espace.

Si le moteur thermique fonctionne en quatre temps, les cylindres 1 et 4 peuvent être connectés à une entrée dudit premier espace et les cylindres 2 et 3 peuvent être connectés à une entrée dudit deuxième espace lorsque lesdits cylindres 1 à 4 sont sensiblement en position Point Mort Haut Combustion (PMHc).

Si le moteur thermique fonctionne en deux temps, les cylindres 1 et 4 peuvent être connectés à une sortie dudit premier espace et les cylindres 2 et 3 peuvent être connectés à une sortie dudit deuxième espace lorsque lesdits cylindres 1 à 4 sont sensiblement en position Point Mort Bas Admission (PMBa)

Selon une autre variante de réalisation, lorsque ledit moteur thermique fonctionne selon un cycle à deux temps et s'il comprend quatre cylindres numéroté de 1 à 4 en partant du volant moteur, les cylindres 1 et 2 peuvent être connectés audit premier espace et les cylindres 3 et 4 peuvent être connectés audit deuxième espace.

Chacune desdites entrées et sorties est de préférence munie d'une soupape ou d'un clapet ou d'un boisseau rotatif.

Chaque cylindre du moteur thermique peut comporter une soupape de charge destinée à transférer de l'air comprimé entre ledit réservoir et le ou lesdits cylindres du moteur thermique.

D'autres caractéristiques et avantages de l'invention apparaîtront au cours de la description qui suit de modes de réalisation de l'invention, donnés à titre d'exemples non limitatifs et en référence aux dessins annexés qui montrent:
- la figure 1, le schéma d'un moteur hybride thermique-pneumatique selon l'art antérieur;
- la figure 2, le schéma d'une forme de réalisation du réservoir d'air comprimé;
- la figure 3, les variations de pression dans un cylindre et dans le réservoir d'air comprimé, en fonction de l'angle vilebrequin, pour un moteur thermique fonctionnant en cycle à 2 temps;
- la figure 4, les levées de soupapes d'admission et d'échappement en fonction de l'angle du vilebrequin du moteur thermique fonctionnant en cycle à 2 temps;
- la figure 5, les variations de pressions dans le cylindre et dans le réservoir d'air, en fonction de l'angle vilebrequin, pour un moteur thermique fonctionnant en cycle à 4 temps;
- la figure 6 les levées de soupapes d'admission et d'échappement en fonction de l'angle du vilebrequin du moteur thermique fonctionnant en cycle à 4 temps;
- les figures 7 à 13, différents systèmes permettant de déplacer un piston dans le réservoir d'air comprimé avec un mouvement oscillant;
- la figure 14, une autre forme de réalisation schématique du réservoir d'air comprimé;
- les figures 15a à 15d, les connexions des cylindres aux différentes entrées et sorties du réservoir représenté schématiquement à la figure 14, pour un moteur thermique fonctionnant en mode 4 temps ou 2 temps; et
- les figures 16a à 16d, les connexions des cylindres aux différentes entrées et sorties du réservoir représenté schématiquement à la figure 14, pour un moteur thermique fonctionnant en mode 2 temps.

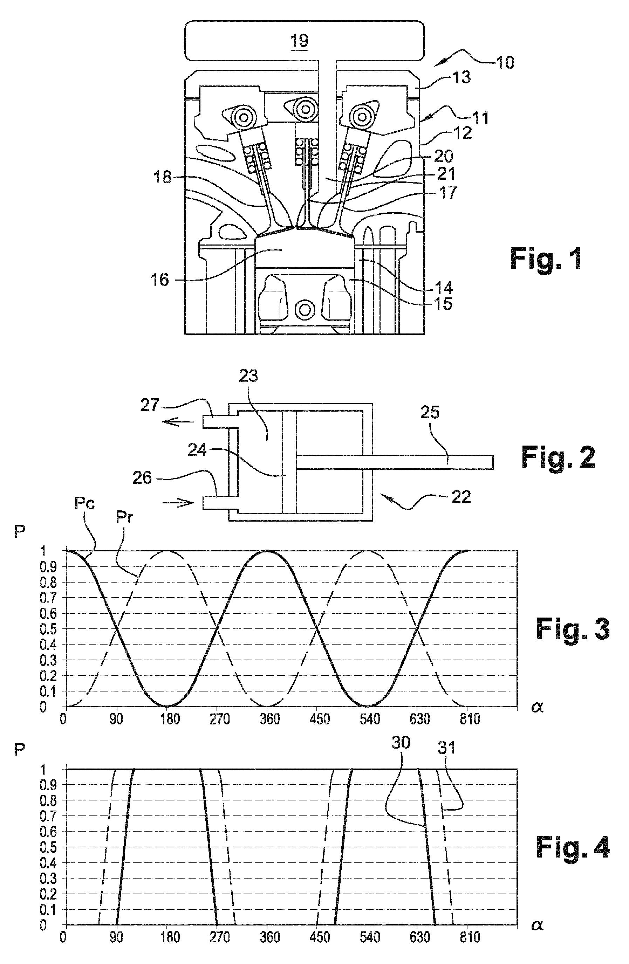

La figure 1 représente schématiquement et en coupe transversale une partie d'un moteur hybride pneumatique-thermique 10 selon l'art antérieur. Le moteur thermique 11 comporte un carter de cylindres 12 fermé par une culasse 13. Un bloc cylindre avec une chemise 14 et un piston 15 délimitent un cylindre 16 (ou une chambre de combustion) qui peut être fermé ou ouvert par des soupapes: dans l'exemple représenté, le moteur comporte, par cylindre, une soupape d'admission 17 et une soupape d'échappement 18. De plus, le moteur hybride comporte un réservoir d'air comprimé 19 qui peut communiquer avec le cylindre 16 par l'intermédiaire d'une conduite 20 et d'une soupape 21, appelée soupape de charge. Le fonctionnement d'un tel moteur hybride pneumatique-thermique est bien connu et décrit par exemple dans la demande de brevet FR 2 865 769, déposée le 30/01/2004 et publiée le 05/08/2005. La réserve d'air comprimé peut être utilisée, par exemples, pour démarrer le moteur thermique muni d'un système d'arrêt et de redémarrage automatique (système "Stop & Start"), pour le fonctionnement du moteur en mode pneumatique uniquement, pour créer des turbulences dans les cylindres de façon à favoriser la combustion et/ou pour la suralimentation du moteur thermique.

Il faut remarquer qu'un moteur hybride thermique-pneumatique peut ne pas comporter de soupape de charge 21, la communication des cylindres (16) pouvant alors être effectuée à l'aide des soupapes d'échappement comme décrit dans les brevets FR 2 831 606 et FR 2 831 609, ou à l'aide des soupapes d'admission comme décrit dans le brevet FR 2 901 846 A1.

De façon classique, le réservoir 19 peut être rempli d'air comprimé, généralement entre 10 et 20 bars, par exemple lors de la phase de compression du cycle classique à quatre temps d'un moteur thermique ou en récupérant de l'énergie au freinage du véhicule en n'injectant pas de carburant dans les cylindres et en comprimant l'air injecté dans les cylindres. L'air comprimé est alors stocké dans le réservoir 19.

Selon l'invention, le réservoir 19 a une structure particulière, à géométrie variable, qui permet d'ajuster la pression de l'air dans le réservoir. Un mode de réalisation du réservoir 19, particulièrement bien adapté lorsque le moteur thermique 11 ne comporte qu'un seul cylindre, est représenté schématiquement sur la figure 2. Ce réservoir 22 comporte une chambre 23 dans laquelle un piston 24 peut se déplacer. Ce piston est muni d'une tige 25. La chambre 23 a avantageusement une forme cylindrique et elle comporte une entrée 26 et une sortie 27 par lesquelles l'air comprimé peut respectivement entrer et sortir de la chambre 23. L'entrée 26 et la sortie 27 sont chacune munies d'une vanne permettant de découvrir une section de passage contrôlé, telle que par exemple une soupape, un clapet ou encore une vanne à boisseau rotatif. Chaque vanne est commandée par un contrôleur (non représenté), tel qu'un calculateur, par exemple un calculateur dédié au fonctionnement du moteur thermique. L'entrée 26 et la sortie 27 sont connectées au cylindre 16 du moteur thermique, soit par l'intermédiaire d'un conduit 20 et d'une soupape de décharge, soit à une soupape d'admission 17 ou d'échappement 18.

Selon l'invention, la pression à l'intérieur de la chambre 23 est ajustée pendant les phases de transfert d'air comprimé du cylindre vers le réservoir 22 de façon à améliorer le transfert de l'air comprimé. Avantageusement, on introduit une différence de phase entre la pression P_{C} dans le cylindre et la pression P_{R} dans le réservoir. De préférence, la pression P_{R} dans la chambre 23 du réservoir est ajustée de façon à être en opposition de phase par rapport à la pression P_{C} dans le cylindre 16 du moteur thermique, pendant la phase de récupération d'énergie (phase de freinage ou de décélération) et pendant la phase de restitution d'énergie (par exemple phase de démarrage du moteur thermique muni d'un système Stop & Start ou de suralimentation du moteur thermique ou en fonctionnement du moteur hybride en mode pneumatique uniquement). Les figures 3 et 4 illustrent ce choix.

La courbe P_{C}, en trait plein, de la figure 3 représente la pression régnant dans le ou dans un cylindre du moteur thermique, fonctionnant en mode 2 temps, en fonction de l'angle α du vilebrequin du moteur thermique et la courbe P_{R}, en pointillés, représente la pression régnant dans la chambre 23 du réservoir à air comprimé. On remarque que ces pressions varient de façon sensiblement sinusoïdale (les pressions sont adimensionnées sur les figures). La pression P_{R} dans le réservoir est de préférence choisie de façon à être en opposition de phase avec la pression P_{C} dans le cylindre. La pression P_{R} dans le réservoir est donc maximale lorsque la pression P_{C} dans le cylindre est minimale et, inversement, la pression P_{R} dans le réservoir est minimale lorsque la pression P_{C} dans le cylindre est maximale. On obtient ainsi une bonne efficacité de transfert de l'air comprimé du réservoir vers le cylindre pendant les phases de restitution d'énergie et inversement du cylindre vers le réservoir pendant les phases de récupération d'énergie.

L'opposition de phase entre la pression dans le réservoir et la pression dans un cylindre correspond au mode de réalisation préféré. Cependant le transfert d'air du réservoir vers un cylindre, et inversement du cylindre vers le réservoir, est favorisé lorsqu'il existe une décalage de phase entre la pression dans le réservoir et la pression dans le cylindre. Ce décalage peut par exemple varier de -90° à +90° autour du déphasage de 180° qui correspond à l'opposition de phase.

La courbe 30, en trait plein, de la figure 4 représente les levées des soupapes d'admission en fonction de l'angle α du vilebrequin du moteur thermique, alors que la courbe 31, en pointillés, représente les levées des soupapes d'échappement.

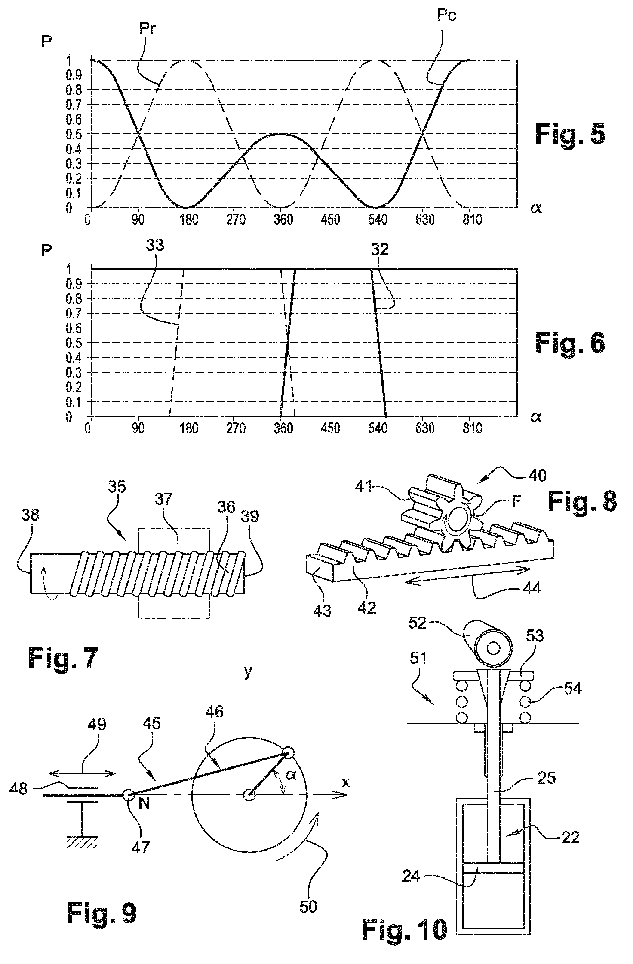

Les figures 5 et 6 concernent le fonctionnement en 4 temps du moteur thermique. Sur la figure 5, la courbe en trait plein représente la pression P_{C} dans le cylindre en fonction de l'angle α du vilebrequin, alors que la courbe en pointillés représente la pression P_{R} dans le réservoir. La courbe 32, en traits plein, de la figure 6 représente la levée des soupapes d'admission, en fonction de l'angle α du vilebrequin; alors que la courbe 33, en pointillés, représente la levée des soupapes d'échappement. Comme pour le fonctionnement en 2 temps, la pression P_{R} est choisie de préférence en opposition de phase avec la pression P_{C} ; la pression P_{R} est donc maximale lorsque la pression P_{C} est minimale et inversement. Ceci est obtenu en faisant varier le volume de la chambre 23 (figure 2) entre une valeur maximale et une valeur minimale, en déplaçant le piston 24.

Le piston 24 peut être déplacé en donnant à la tige 25 un mouvement oscillant, en opposition de phase avec le piston, mouvement qui peut être obtenu, par exemple, à l'aide de l'un des systèmes représentés sur les figures 7 à 13.

La figure 7 représente schématiquement un système 35 comportant une vis 36 se déplaçant dans un écrou fixe 37. L'une des deux extrémités de la vis, par exemple l'extrémité 38, est connectée à un moteur électrique (non représenté) pour tourner la vis 36 dans un sens, puis dans l'autre. L'autre extrémité 39 de la vis est reliée à la tige du piston du réservoir d'air.

La figure 8 représente un système 40 à engrenage et à crémaillère. Il est composé d'une roue dentée 41 mobile en rotation à l'aide d'un moteur électrique (non représenté). Les dents de la roue 41 sont engrenées avec une crémaillère 42 dont l'une des deux extrémités, par exemple 43, est solidaire de la tige du piston du réservoir d'air comprimé. Le moteur électrique peut tourner dans les deux sens de rotation représentés par la flèche F: il en résulte que la crémaillère, et donc le piston du réservoir, peut effectuer un mouvement oscillant représenté par la flèche 44.

Pour les systèmes représentés sur les figures 7 et 8, le moteur électrique doit tourner dans les deux sens de rotation et il doit tourner n fois plus vite que le vilebrequin, n étant le nombre de cylindres, voir même 2n fois plus vite si le cylindre a la possibilité de fonctionner en 2 temps par exemple par variation de l'actuation de ses soupapes.

La figure 9 représente schématiquement un système bielle-manivelle 45 composé d'une manivelle 46 ayant un point 47 qui effectue un mouvement oscillant le long de l'axe Ox. Le point 47 est solidaire de la tige du piston du réservoir d'air comprimé ou d'une bielle 48 laquelle est alors solidaire de ladite tige. Cette dernière effectue donc un mouvement oscillant représenté par la flèche 49. Un des avantages de ce système est que la bielle tourne dans le même sens de rotation représenté par la flèche 50. La bielle doit tourner n fois plus vite que le vilebrequin, n étant le nombre de cylindres, voir même 2n fois plus vite si le cylindre a la possibilité de fonctionner en 2 temps par variation de l'actuation de ses soupapes.

La figure 10 représente schématiquement un système 51 à came à ressort. Il se compose d'une came 52 mise en rotation par un moteur électrique (non représenté), la came 52 appuyant sur un poussoir 53 qui est entrainé en position haute par un ressort 54. Le poussoir 53 est solidaire de la tige 25 du piston 24 du réservoir 22. En tournant, la came 52 impose un mouvement oscillant au piston 24. La came doit tourner n fois plus vite que le vilebrequin, n étant le nombre de cylindres, voir même 2n fois plus vite si le cylindre a la possibilité de fonctionner en 2 temps par variation de l'actuation de ses soupapes.

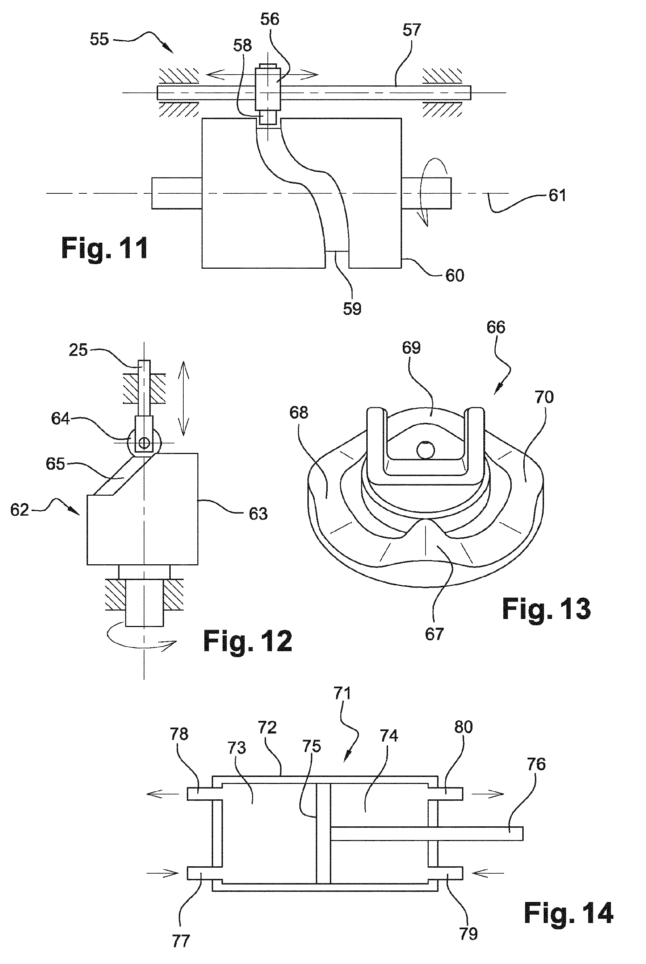

La figure 11 représente schématiquement un système 55 à came à rainure. Ce système comporte un galet mobile 56 fixé, soit à une tige 57 solidaire de la tige 25 du piston 24 du réservoir à air, soit directement à ladite tige 25 du piston. Le galet mobile 56 comporte une douille 58 qui peut se déplacer dans une rainure 59 tracée à la surface d'un tambour 60. Ce tambour peut être mis en rotation autour de son axe longitudinal 61, à l'aide d'un moteur électrique (non représenté), la douille 58 se déplaçant dans la rainure 59 en procurant un mouvement oscillant à la tige 57 et donc au piston du réservoir à air. Avec un tel système, le tambour peut tourner à la même vitesse que le vilebrequin si la rainure 59 est conçue en conséquence.

La figure 12 représente un système 62 à came à tambour. Ce système comporte un tambour 63 et un galet 64 Le galet 64 est solidaire de la tige 25 du piston du réservoir d'air. La surface du tambour comporte un renfoncement 65 sur lequel le galet 64 peut se déplacer lorsque le tambour est mis en rotation (à l'aide d'un moteur électrique non représenté). Le renfoncement 65 est conçu de sorte que la tige effectue un mouvement oscillant prédéterminé lorsque le tambour est mis en rotation. Le système peut comporter plusieurs cames. Le système peut être conçu de telle sorte que le tambour et le vilebrequin tournent à la même vitesse.

La figure 13 montre le plateau 66 d'un système à plateau à cames. Le plateau comporte une ou plusieurs came(s) 67, par exemple 4 cames 67, 68, 69 et 70 régulièrement espacées l'une par rapport à l'autre. Un tel système est bien connu de l'homme du métier puisqu'il est utilisé dans les pompes à injection de carburant Diesel.

Les systèmes montrés schématiquement sur les figures 7 à 13 représentent quelques exemples de dispositifs pouvant imprimer au piston du réservoir à air comprimé un mouvement oscillant. D'autres systèmes connus pour obtenir un tel mouvement pourraient être utilisés, par exemple un actuateur linéaire utilisant un moteur électrique linéaire à base d'aimants permanents. Le système choisi est piloté par un contrôleur, par exemple le calculateur pilotant le fonctionnement du moteur thermique.

La figure 14 représente schématiquement un mode de réalisation avantageux du réservoir à air comprimé, lorsque le moteur thermique comporte plusieurs cylindres. Ce réservoir 71 comporte une chambre 72 séparée en deux espaces 73 et 74 par un piston 75 muni d'une tige 76. Chacun desdits espaces comporte une entrée et une sortie; l'espace 73 ayant une entrée 77 et une sortie 78, l'espace 74 ayant un entrée 79 et une sortie 80. Chacune des entrées et sorties est munie d'une vanne permettant de découvrir une section de passage contrôlé, telle que par exemple une soupape, un clapet ou encore une vanne à boisseau rotatif. Chaque vanne est commandée par un contrôleur (non représenté), tel qu'un calculateur, par exemple un calculateur dédié au fonctionnement du moteur thermique. Pour un moteur thermique à 4 cylindres, il est possible de n'utiliser qu'un seul réservoir analogue au réservoir 71. Le mouvement du piston 75 dépend de la flexibilité des soupapes du moteur thermique (en d'autres termes si les soupapes permettent un fonctionnement selon un cycle à 2 temps) et plus particulièrement si, dans la phase de récupération d'énergie (par exemple au freinage, le système fonctionnant en mode pompe), ce moteur thermique fonctionne selon un cycle à 2 temps ou à 4 temps.

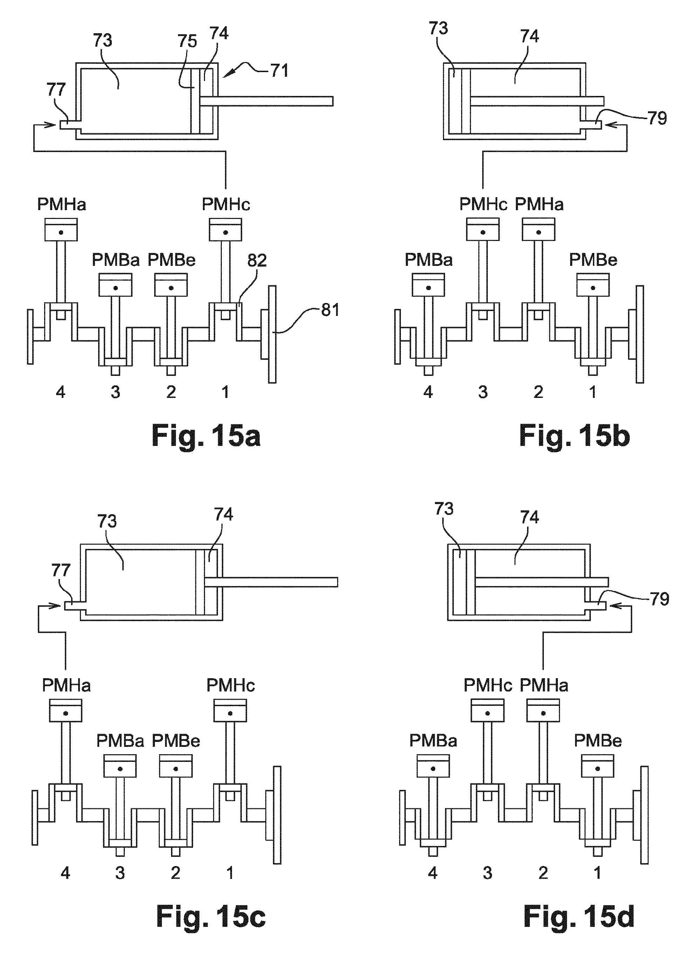

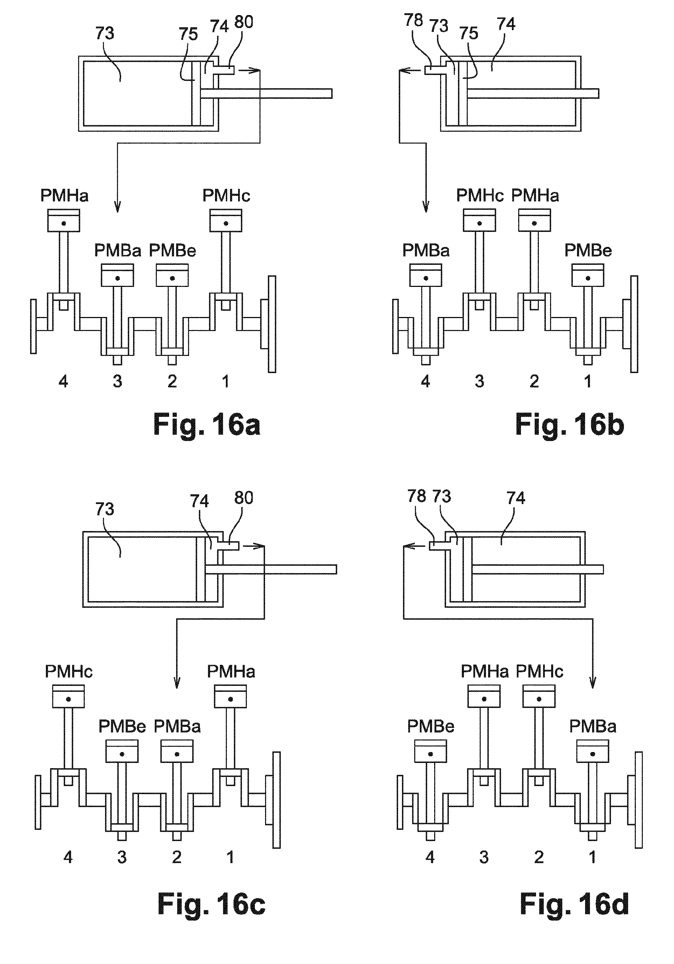

Lorsque le moteur thermique comporte 4 cylindres et fonctionne selon un cycle à quatre temps ou à deux temps et en numérotant les cylindres de 1 à 4 en commençant du coté du volant moteur, les cylindres 1 et 4 doivent être connectés à un espace 73 ou 74 du réservoir et les cylindres 2 et 3 à l'autre espace. Lorsque le moteur fonctionne selon un cycle à deux temps, les cylindres 1 et 2 peuvent aussi être connectés à l'un des espaces 73 et 74 et les cylindres 3 et 4 doivent être connectés à l'autre espace. C'est ce qui est illustré sur les figures 15a-15d et 16a-16d.

Les modes de réalisation illustrés sur les figures 15 et 16 concernent à un moteur thermique à quatre cylindres fonctionnant en quatre (figures 15) ou deux temps (figures 16). Le moteur thermique comprend un vilebrequin 81 avec quatre pistons et un volant moteur 82 à l'extrémité droite (sur les figures 15 et 16) du vilebrequin. Les pistons sont numérotés de 1 à 4 en partant du volant moteur 82. Les positions des pistons sont indiquées en fonction du cycle de fonctionnement par:
- PMHa pour le point mort haut admission,
- PMBa pour point mort bas admission,
- PMBe pour point mort bas échappement,
- PMHc pour point mort haut combustion,
- PMHa pour point mort haut admission.
Le réservoir 71 comporte, comme illustré sur la figure 14, un piston 75 séparant le réservoir en deux espaces 73 et 74, l'espace 73 ayant une entrée 77 et une sortie 78 et l'espace 74 ayant une entrée 79 et une sortie 80.

Les figures 15 illustrent la connexion des pistons (ou plus précisément le cylindre ou la chambre de combustion du cylindre) lorsqu'ils se trouvent, successivement, sensiblement en position PMHc :
- figure 15a, le piston n°1 est connecté à l'entrée 77 de l'espace 73 du réservoir à air comprimé, le piston 2 étant au PMBe, le piston 3 au PMBa et le piston 4 au PMHa;
- figure 15b, le piston n°3 est connecté à l'entrée 79 de l'espace 74, le piston 1 étant au PMBe, le piston 2 au PMHa et le piston 4 étant au PMBa;
- figure 15c, le piston n°4 est connecté à l'entrée 77 de l'espace 73, le piston 1 étant au PMHa, le piston 2 au PMBa et le piston 3 au PMBe.
On remarque que lorsque la pression est maximale dans un cylindre (ce qui est le cas au PMHc), l'espace du réservoir où la pression est minimale est en communication avec le cylindre au PMHc (c'est le cas sur les figures 15 lorsque l'espace 73 est à son volume maximum). On a bien un décalage de phase entre la pression dans le cylindre et la pression dans l'un des espaces du réservoir et, plus précisément, la pression dans le cylindre est en opposition de phase avec la pression dans l'un des espaces du réservoir.

Les figures 16 illustrent, pour un fonctionnement du moteur thermique à quatre cylindres selon un cycle à deux temps, les connexions des pistons (ou plus précisément des chambres de combustion des cylindres) lorsqu'ils se trouvent successivement, sensiblement en position PMBa:
- la figure 16a, le piston n°3 est connecté à la sortie 80 de l'espace 74, le piston 1 étant au PMHc, le piston 2 au PMBe et le piston 4 au PMHa;
- la figure 16b, le piston 4 est connecté à la sortie 78 de l'espace 73, le piston 1 étant au PMBe, le piston 2 au PMHa et le piston 3 étant au PMHc;
- la figure 16c, le piston 2 est connecté à la sortie 80 de l'espace 74, le piston 1 étant au PMHa, le piston 3 au PMBe et le piston 4 au PMHc;
- la figure 16d, le piston 1 est connecté à la sortie 78 de l'espace 73, le piston 2 étant au PMHc, le piston 3 au PMHa et le piston 4 au PMBe.

On remarque que lorsqu'un piston se trouve au PMBa, la pression dans le cylindre est minimale et que la connexion du cylindre avec une pression minimale est établie avec un espace du réservoir d'air lorsque la pression dans cet espace du réservoir est maximale (lorsque le piston occupe une position où le volume de l'espace mis en communication avec le cylindre est minimale). On a bien un décalage de phase entre la pression dans le cylindre et la pression dans l'un des espaces du réservoir et, plus précisément, la pression dans le cylindre est en opposition de phase avec la pression dans l'un des espaces du réservoir.

Le transfert d'air du réservoir vers un cylindre ou inversement d'un cylindre vers le réservoir est facilité par le fait que les pressions dans le réservoir et dans le cylindre sont en décalage de phase et plus particulièrement en opposition de phase.

La présente invention permet de réduire la pollution des moteurs thermique en diminuant les émissions de gaz carbonique.

Les modes de réalisation décrits comportent un seul réservoir d'air comprimé. Cependant il serait possible d'utiliser plusieurs réservoirs d'air associé à un moteur thermique, par exemple un réservoir par cylindre.

## Revendications

1. Procédé d'alimentation en air d'un moteur hybride pneumatique-thermique (10), ledit moteur hybride comportant un moteur thermique (11) muni d'au moins un cylindre (16) et d'un réservoir d'air comprimé (19, 22, 71) qui peut être mis en communication avec ledit cylindre de façon à transférer de l'air comprimé entre ledit réservoir et ledit cylindre, le procédé étant **caractérisé en ce que** la pression de l'air comprimé pendant les phases de transfert de l'air comprimé est ajustée de façon à améliorer le transfert de l'air comprimé.

2. Procédé selon la revendication 1 **caractérisé en ce que** la pression P_{C} dans le cylindre est choisie en décalage de phase avec la pression P_{R} dans le réservoir.

3. Procédé selon la revendication 2 **caractérisé en ce que** la pression P_{R} dans ledit réservoir est ajustée de façon à être en opposition de phase par rapport à la pression P_{C} dans ledit cylindre.

4. Procédé selon l'une des revendications précédentes **caractérisé en ce que** pendant les phases de transfert d'air comprimé, la pression P_{R} de l'air comprimé dans ledit réservoir est choisie à sa valeur maximale lorsque la pression P_{C} de l'air comprimé dans ledit cylindre atteint sa valeur minimale et inversement la pression P_{R} de l'air comprimé dans ledit réservoir est choisie à sa valeur minimale lorsque la pression P_{C} de l'air comprimé dans ledit cylindre atteint sa valeur maximale.

5. Dispositif d'alimentation en air d'un moteur hybride pneumatique-thermique (10) comportant au moins un cylindre (16), chaque cylindre comprenant au moins une soupape d'admission d'air (17) et au moins une soupape d'échappement (18), au moins un réservoir d'air comprimé (22) muni d'une entrée (26) et d'une sortie (27), ledit dispositif d'alimentation étant **caractérisé en ce que** ledit réservoir comporte des moyens (75, 76) pour faire varier la pression dans ledit réservoir.

6. Dispositif selon la revendication 5 **caractérisé en ce que** l'intérieur dudit réservoir comporte une chambre (72) de forme sensiblement cylindrique et **en ce que** lesdits moyens pour faire varier la pression dans le réservoir comportent un piston (75) qui peut se déplacer dans ladite chambre du réservoir et des moyens de déplacement dudit piston (35, 40, 45, 51, 55, 62, 66).

7. Dispositif selon la revendication 6 **caractérisé en ce que** lesdits moyens de déplacement sont choisis parmi l'un des systèmes suivants:
- un actuateur linéaire comprenant un moteur électrique linéaire;
- un actuateur rotatif (35) comprenant un écrou fixe (37) et une vis (36) se déplaçant dans ledit écrou, ladite vis pouvant être mise en rotation par un moteur électrique, ladite vis étant solidaire dudit piston (75);
- un système à crémaillère (40) comprenant une roue dentée (41) pouvant être mise en rotation par un moteur électrique et une crémaillère (42) pouvant être déplacée à l'aide de ladite roue dentée, ladite crémaillère étant solidaire dudit piston;
- un système bielle-manivelle (45) dont la manivelle (46) est entrainée en rotation par un moteur électrique et ladite bielle (48) étant solidaire dudit piston;
- un système à came à ressort (51) ou à rainure (55) ou à tambour (62).

8. Dispositif selon l'une des revendications 5 et 6 **caractérisé en ce que**, ledit moteur thermique (11) comprenant plusieurs cylindres (16), ledit piston (75) divise ladite chambre (72) en un premier espace (73) et un deuxième espace (74) et **en ce que** chacun desdits espaces comporte une entrée (77, 79) et une sortie (78, 80) qui peuvent être reliées audits cylindres.

9. Dispositif selon la revendication 8 **caractérisé en ce que**, ledit moteur thermique fonctionnant selon un cycle à quatre temps ou à deux temps et comprenant quatre cylindres numérotés de 1 à 4 en partant du volant moteur (82), les cylindres 1 et 4 peuvent être connectés audit premier espace (73) et les cylindres 2 et 3 peuvent être connectés audit deuxième espace (74).

10. Dispositif selon la revendication 9 **caractérisé en ce que** les cylindres 1 et 4 peuvent être connectés à une entrée (77) dudit premier espace et les cylindres 2 et 3 peuvent être connectés à une entrée (79) dudit deuxième espace lorsque lesdits cylindres 1 à 4 sont, successivement, sensiblement en position Point Mort Haut Combustion (PMHc)

11. Dispositif selon la revendication 8 **caractérisé en ce que**, le moteur thermique fonctionnant en deux temps, les cylindres 1 et 4 peuvent être connectés à une sortie (78) dudit premier espace et les cylindres 2 et 3 peuvent être connectés à une sortie (80) dudit deuxième espace lorsque lesdits cylindres 1 à 4 sont, successivement, sensiblement en position Point Mort Bas Admission (PMBa)

12. Dispositif selon la revendication 8 **caractérisé en ce que**, ledit moteur thermique fonctionnant selon un cycle à deux temps et comprenant quatre cylindres numéroté de 1 à 4 en partant du volant moteur (82), les cylindres 1 et 2 peuvent être connectés audit premier espace (73) et les cylindres 3 et 4 peuvent être connectés audit deuxième espace (74).

13. Dispositif selon l'une des revendications 8 à 12 **caractérisé en ce que** chacune desdites entrées (77,79) et sorties (78, 80) est munie d'une soupape ou d'un clapet ou d'un boisseau rotatif.

14. Dispositif selon l'une des revendications 5 à 13 **caractérisé en ce que** chaque cylindre dudit moteur thermique comporte une soupape de charge (21) destinée à transférer de l'air comprimé entre ledit réservoir et le ou lesdits cylindres du moteur thermique.
